# EUROPÄISCHE PATENTANMELDUNG

(11) **EP 0 824 887 A1**
(43) Veröffentlichungstag der Anmeldung: **25.02.1998**
(21) Anmeldenummer: 97113172.7
(22) Anmeldetag: 31.07.1997
(51) Int. Cl.: A47J 43/25

(54) **Küchengerät zum Schneiden oder Reiben von Gut, vorzugsweise Obst oder Gemüse**

(30) Priorität: 22.08.1996 DE 19633986
(71) Anmelder: A. Börner GmbH, 54526 Niederkail (DE)
(72) Erfinder: Zirges, Richard, 54526 Niederkail (DE); Plein, Josef, 54647 Dudeldorf (DE)
(74) Vertreter: Goddar, Heinz J., Dr.

(57) **Zusammenfassung**

Küchengerät für das Schneiden oder Reiben von Gut, vorzugsweise Obst oder Gemüse, mit einer Grundplatte, wobei an wenigstens zwei Rändern der Grundplatte Seitenteile (38,40) angeordnet sind, welche sich von den Rändern in die von den Oberflächen abgewandte Richtung erstrecken, wobei die Seitenteile mit der Unterseite der Grundplatte einen Winkel von mehr als 90° bilden, so daß die Küchengeräte derart stapelbar sind, daß die Seitenteile eines ersten Küchengerätes die Seitenteile eines zweiten Küchengerätes zumindest teilweise umgreifen, wobei die Grundplatten der Küchengeräte im wesentlichen parallel sind und mindestens ein Seitenteil, welches im wesentlichen parallel zur Reib- oder Schneidrichtung ist, an Außenseite und Innenseite mit Ausformungen versehen ist, so daß beim Stapeln der Küchengeräte sich die Seitenteile kraftschlüssig umfassen.

## Beschreibung

Die vorliegende Erfindung betrifft ein Küchengerät für das Schneiden oder Reiben von Gut, vorzugsweise Obst oder Gemüse, mit einer Grundplatte.

Im Patent Nr. 195 23 272 ist ein Küchengerät offenbart, welches eine Grundplatte aufweist, auf deren Oberseite Anlaufflächen und zwischen diesen Anlaufflächen mindestes eine Messerreihe im wesentlichen quer zur Schneidrichtung angeordnet sind. Die Messer der Küchenreibe ragen mit ihren Schneiden in der Höhe über die Anlauffläche hinaus, wobei die Messer, oberhalb der Oberseite und beabstandet von dieser Querstege aufweisen. Im Bereich unterhalb der Querstege ist die Grundplatte mit Öffnungen versehen, so daß das geschnittene Gut durch diese Öffnungen hindurchfallen kann. Die einzelnen Messer sind so gestaltet, daß sich mit dem Küchengerät dünne und breite Streifen des Gutes abschneiden lassen und der abgeschnittene Streifen dabei besonders regelmäßig geschnitten ist. Durch besondere Ausgestaltungen der Messer wird erreicht, dem Gut eine zuverlässige Führung während des Schneidvorgangs zukommen zu lassen und gleichzeitig dem Gut ein appetitliches Schnittmuster zuzufügen. Dementsprechend werden in dem Patent Nr. 195 23 272 verschiedene Ausführungsformen im Zusammenhang mit der Gestalt der Messer offenbart. Nach einer besonderen Ausführungsform der Erfindung im Patent Nr. 195 23 272 sind die Messer auswechselbar, so daß abwechslungsreiche Schnittergebnisse erzielt werden können. Die Auswechselbarkeit der Messer macht jedoch relativ aufwendige konstruktive Maßnahmen erforderlich, was sich nachteilig auf die Kosten des Gerätes auswirkt.

Der vorliegenden Erfindung liegt daher die Aufgabe zugrunde, ein Küchengerät zur Verfügung zu stellen, welches die oben genannten Vorteile des Küchengerätes aus dem Patent Nr. 195 23 272 aufweist, das Anfertigen verschiedener Reib- oder Schnittmuster unterstützt und gleichzeitig aber das Auswechseln der Messer entbehrlich macht.

Erfindungsgemäß wird diese Aufgabe dadurch gelöst, daß an wenigstens zwei Rändern der Grundplatte des Küchengerätes Seitenteile angeordnet sind, welche sich von den Rändern in die von den Anlaufflächen der Grundplatte abgewandte Richtung erstrecken, wobei die Seitenteile mit der Unterseite der Grundplatte einen Winkel von mehr als 90° bilden, so daß die Küchengeräte derart stapelbar sind, daß die Seitenteile eines ersten Küchengerätes die Seitenteile eines zweiten Küchengerätes zumindest teilweise umgreifen, wobei die Grundplatten der Küchengeräte im wesentlichen parallel sind und mindestens ein Seitenteil, welches im wesentlichen parallel zur Reib- oder Schneidrichtung ist, an Außenseite und Innenseite mit Ausformungen versehen ist, so daß beim Stapeln der Küchengeräte sich die Seitenteile kraftschlüssig umfassen.

Bevorzugt befinden sich Seitenteile an allen Rändern der Küchenreibe, wobei eines der Seitenteile, welches sich an einem Rand befindet, der senkrecht zur Reib- oder Schneidrichtung ist, als Haltevorrichtung ausgebildet ist.

Besonders vorteilhaft ist es, wenn beide Seitenteile, welche im wesentlichen parallel zur Reib- oder Schneidrichtung angeordnet sind, an Außenseite und Innenseite Ausformungen aufweisen, so daß beim Stapeln der Küchengeräte diese kraftschlüssig ineinandergreifen können.

Bevorzugt ist die Ausformung an der Außenseite der Seitenteile eine sich im wesentlichen über die gesamte Länge der Seitenteile erstreckende Wulst, während die Ausformung an der Innenseite der Seitenteile sich zumindest teilweise über die Länge der Seitenteile erstreckt und nicht durchgängige Wülste sind.

Dabei ist es vorteilhaft, wenn die Kraft für das kraftschlüssige Umfassen der Seitenteile durch die Elastizität der Seitenteile aufgebracht wird.

Weiterhin stehen bei dem erfindungsgemäßen Küchengerät die Seitenteile, welche sich an den Rändern befinden, die im wesentlichen parallel zur Reib- oder Schneidrichtung verlaufen, über die Anlaufflächen der Grundplatte hervor, so daß sie eine Führung für die Schneidbewegung bilden.

In einer vorteilhaften Ausführungsform weist das Küchengerät auf der Oberseite der Grundplatte Anlaufflächen auf, wobei zwischen diesen Anlaufflächen mindestens eine Messerreihe angeordnet ist, welche im wesentlichen quer zur Reib- oder Schneidrichtung verläuft. Die Messer sind mit Schneiden ausgestattet, die in der Höhe über die Anlaufflächen hinausragen und zur Unterseite der Grundplatte offen ausgebildet sind. Die mindestens eine Messerreihe ist unter Bildung von oberen Querstegen ausgestaltet, wobei die die Messer bildenden oberen Querstege über die Anlaufflächen hinausragen und jeweils eine im wesentlichen zentral angeordnete Vertiefung in Richtung auf die Unterseite der Grundplatte aufweisen. In dieser Ausführungsform ist das Küchengerät insbesondere dadurch gekennzeichnet, daß an den Schneiden der oberen Querstege mindestens eine in Richtung der Grundplatte weisende v-förmige Anlaufnut oder mindestens zwei, in Richtung von der Grundplatte weg weisende, einen Zwischenraum zwischen ihnen definierende, v-förmige Anlaufnuten angeordnet sind, die sowohl in ihrer vertikalen als auch in ihrer quer zur Reib- oder Schneidrichtung betrachteten horizontalen Ausdehnung der Größe der Vertiefung derart angepaßt sind, daß ihre Tiefe geringer ist als die Tiefe der Vertiefung und die Gesamtbreite der Anlaufnuten nicht breiter als die Breite der Vertiefung quer zur Reib- oder Schneidrichtung ist, wobei mindestens eine Anlaufnut oder der Zwischenraum zwischen den mindestens zwei Anlaufnuten in Schneidrichtung betrachtet im wesentlichen zentral vor der Vertiefung angeordnet ist.

Das erfindungsgemäße Küchengerät besteht vorzugsweise, abgesehen von den Messern, aus Kunststoff.

Besonders vorteilhaft ist es, wenn die oberen Querstege der Messer durch Kunststoffunterstützungen unterbaut sind.

Schließlich ist es besonders vorteilhaft, wenn die erfindungsgemäßen Küchengeräte ein Set bilden, wobei die Eigenschaft der Stapelbarkeit besonders nützlich ist.

Der Erfindung liegt die Erkenntnis zugrunde, daß die Vorteile, verschiedene Schneid- oder Reibevorrichtungen in erfindungsgemäßen Küchengeräten zur Verfügung zu haben, einfach dadurch gelöst werden kann, daß man die Küchengeräte in preisgünstiger stapelbarer Form anbietet. Der Kunde kann sich zunächst für ein Küchengerät mit einer bestimmten Reib- oder Schneidevorrichtung entscheiden und später weitere Küchengeräte mit anderen Schneidevorrichtungen hinzukaufen. Diese kann er dann platzsparend unterbringen.

Auch der Händler hat Vorteile durch die Stapelbarkeit: Einmal ist auch er ganz besonders an einer platzsparenden Unterbringung seiner Waren interessiert, zum zweiten entsteht durch das Anbieten verschiedener Produkte, die zu einer Serie gehören, das heißt stapelbare Küchengeräte mit verschiedenen Schneidevorrichtungen, eine gewisse Produktbindung, die mit einer erhöhten Wahrscheinlichkeit den Kunden an den betreffenden Händler bindet.

Die Stapelbarkeit wird noch dadurch verbessert, daß an den bevorzugt aus Kunststoff bestehenden Küchengeräten Wülste angeformt sind, welche kraftschlüssig beim Stapelvorgang ineinandergreifen. Ein unbeabsichtigtes Auseinanderrutschen von mehreren aufeinander liegenden Küchengeräten kann so vermieden werden. Zum Beispiel ist so eine effektvolle Präsentation in Kaufhäusern möglich, indem man die Geräte in origineller Weise stapelt.

Indem die Seitenteile zusätzlich besondere Ausformungen an der Oberseite aufweisen, kann ein seitliches Abrutschen mit dem zu schneidenden Gut verhindert werden. Die Messer können zur Erhöhung der Stabilität mit Kunststoff, woraus das Gerät bevorzugt insgesamt besteht, unterbaut werden. Die letzten beiden Eigenschaften sind besonders im Zusammenhang mit modernen Verfahren der kunststoffverarbeitenden Industrie besonders hervorzuheben, da praktisch beliebige Formgebungen ohne weiteres realisierbar sind.

Eine besondere Ausführungsform der vorliegenden Erfindung wird anhand der beiligenden Zeichnungen beispielhaft beschrieben.

Dabei zeigt:
- Figur 1: ein Küchengerät mit Blick auf die Oberseite;
- Figur 2: ein Küchengerät in der in Figur 1 mit II angedeuteten Blickrichtung;
- Figur 3: ein Küchengerät mit Blick auf die Unterseite;
- Figur 4: eine Schnittansicht, wie in Figur 1 mit IV bezeichnet;
- Figur 5: eine Schnittansicht, wie in Figur 1 mit V bezeichnet;
- Figur 6: zwei übereinandergestapelte Küchengeräte in der Ansicht von Figur 2.

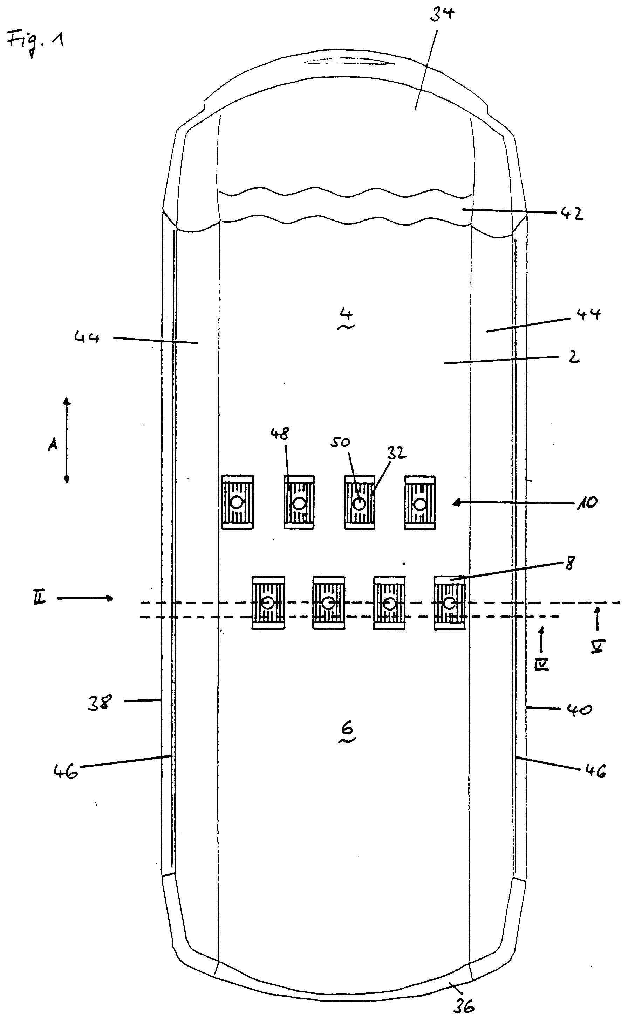

Figur 1 zeigt eine Aufsicht auf ein Küchengerät mit einer Grundplatte 2, welche zwei Anlaufflächen 4, 6 aufweist. In der Grundplatte 2 sind Durchbrüche 8 vorgesehen. Über den Durchbrüchen 8 sind metallische Messer 32 in zwei Messerreihen 10 angeordnet. Das Küchengerät ist von Seitenteilen 34, 36, 38, 40 eingefaßt. Dabei ist eines der Seitenteile 34 als Haltevorrichtung ausgebildet. Es sind Fingermulden 42 erkennbar, in welche von der Rückseite des Küchengerätes eingegriffen wird. Die Seitenteile 38, 40, welche parallel zur Schneidrichtung A angeordnet sind, treten, von der Oberseite der Grundplatte 2 aus gesehen zunächst aus der Zeichenebene in Richtung des Betrachters hervor, so daß sich Führungen 44 für das zu schneidende Gut ergeben. Die Bereiche 46 der Seitenteile 38, 40 fluchten in die vom Betrachter abgewandte Richtung, wobei sie sich über die Ebene der Grundplatte 2 hinaus erstrecken.

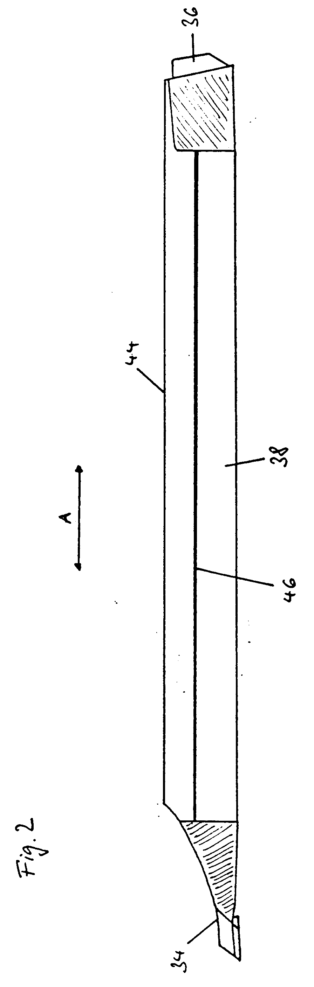

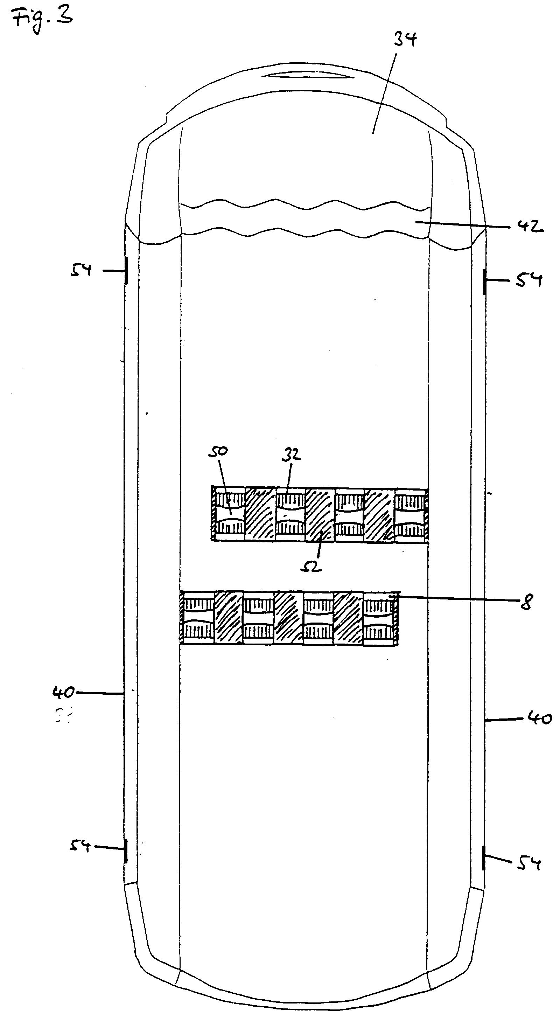

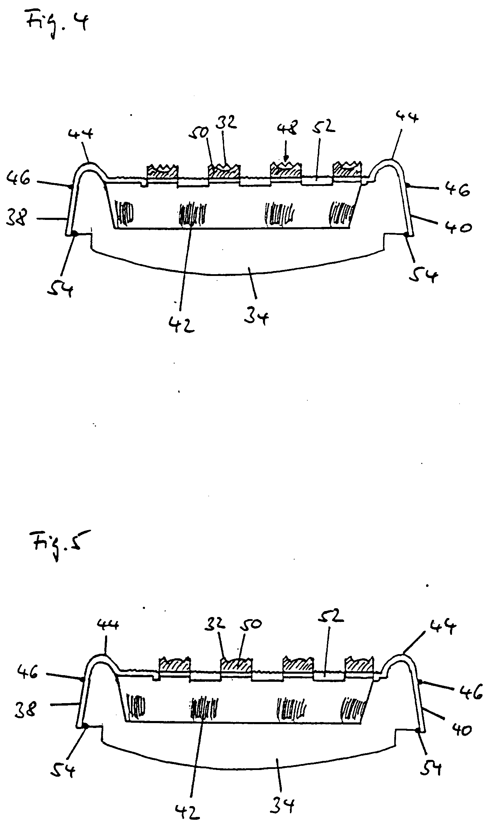

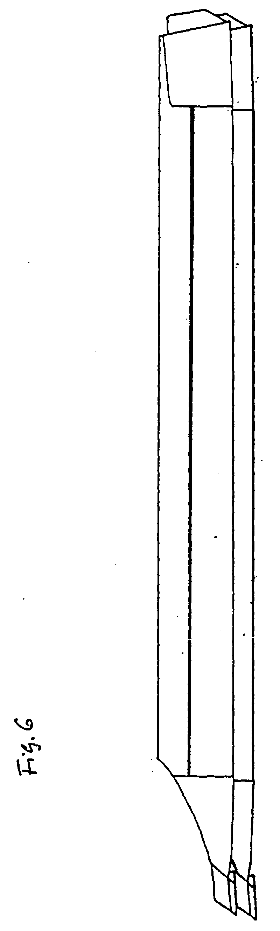

Auf den längs der Schneidrichtung A angeordneten Seitenteilen ist auf ihrer Außenseite eine vorstehende Wulst 46 angeordnet. Die Aufgabe dieser Wulst 46 wird in Zusammenhang mit den Figuren 3 und 6 erläutert. Die Messer 32 überdecken die Durchbrüche 8 nur teilweise, so daß das geschnittene Gut, wenn es über die Anlaufflächen 4, 6 der Grundplatte 2 auf die Messerreihen 10 und über diese hinweg geführt wird, möglichst bequem durch die Durchbrüche 8 hindurchtreten kann. Die Messer 32 sind gezackt ausgebildet, wodurch sich in Schneidrichtung A verlaufende Nuten 48 ergeben. Die Messer 32 werden von an der aus Kunststoff bestehenden Grundplatte 2 angeordneten Kunststoffteilen 50 unterstützt, die im zentralen Bereich der Messer 32 durch diese hindurchtreten und somit beim Blick auf die Oberseite des Küchengerätes sichtbar sind.

In Figur 2 ist eine seitliche Ansicht des Küchengerätes dargestellt, wie in Figur 1 mit II angedeutet. Man erkennt ein längs der Schneidrichtung A angeordnetes Seitenteil 40 sowie das als Haltevorrichtung ausgebildete Seitenteil 34 und das im anderen Endbereich des Küchengerätes angeordnete Seitenteil 36. Auf dem längs der Schneidrichtung A angeordneten Seitenteil 40 ist die Wulst 46 erkennbar. Sie erstreckt sich über den gesamten eine Ebene definierenden Teil des Seitenteils 40, wobei die aus der Ebene vom Betrachter wegweisenden Bereiche des Seitenteils 40 schraffiert dargestellt sind. Insbesondere sind in dieser Ansicht die Messer 32 nicht erkennbar, da sie durch die Führung 44, die durch die besondere Gestalt des Seitenteils 40 gebildet wird, verdeckt werden.

Figur 3 zeigt die Unterseite des Küchengerätes mit seiner Grundplatte 2 und den darin vorgesehenen Durchbrüchen 8. Durch die Durchbrüche 8 hindurch sind die vom Betrachter wegweisenden Messer 32 erkennbar. Diese sind von den Kunststoffunterstützungen 50 unterbaut. Zwischen den Durchbrüchen durch die Grundplatte 2 und seitlich der jeweils äußeren Durchbrüche 8 ist die Grundplatte verdickt. Dies ist durch die auf den Betrachter vorspringenden, schraffiert dargestellten Verdickungen angedeutet. Ebenso ist die Umrahmung des Küchengerätes durch die Seitenteile 34, 36, 38, 40 zu erkennen, wobei das eine Haltevorrichtung bildende Seitenteil 34 in seinem der Grundplatte zugewandten Bereich Fingermulden 42 enthält.

Die längs der Schneidrichtung A angeordneten Seitenteile 38, 40 sind in der Nähe der jeweils angrenzenden Seitenteile 34, 36 mit je zwei Wülsten 54 versehen. Diese befinden sich am äußersten Rand der Seitenteile 38, 40, welche aus der Zeichenebene auf den Betrachter hervorspringen. Mit der vorliegenden schalenartigen Ausformung der Unterseite kann das Küchengerät nun über ein zweites Küchengerät gestülpt werden und zwar derart, daß der in Figur 6 dargestellte Zustand erreicht wird. Die Position der Wülste 54 an der Innenseite der Seitenteile 38, 40 ist bezüglich der Position der Wulst 46 an der Außenseite der Seitenteile 38, 40 so gewählt, daß die Wülste 54 an der Innenseite gerade über die Wulst 46 an der Außenseite des anderen Gerätes greifen und so ein kraftschlüssiger Zusammenhalt der Küchengeräte erreicht wird. Durch die Elastizität des Kunststoffs im allgemeinen und der Seitenteile 38, 40 im speziellen wird die Kraft für den kraftschlüssigen Zusammenhalt der Wülste 48, 54 aufgebracht.

In der Schnittansicht in Figur 4, deren Richtung in Figur 1 angedeutet ist, ist die besondere Formgebung der Seitenteile 38, 40, welche längs der Schneidrichtung A angeordnet sind, dargestellt. Dadurch, daß sich die Seitenteile 38, 40 von der Grundplatte 2 zunächst nach oben erstrecken, um dann nach unten abzuknicken und über die Ebene der Grundplatte 2 hinauszugehen, ergibt sich einerseits die Führung 44 für das zu schneidende Gut und andererseits die schalenartige Form des Küchengerätes, welche das Stapeln der Küchengeräte ermöglicht. Ebenso ist an den Außenbereichen der Seitenteile 38, 40 jeweils die Wulst 46 angedeutet; am unteren Ende des Innenbereiches erkennt man die Wülste 54. Im Hintergrund ist das Seitenteil 34 angedeutet, welches die mit Fingermulden 42 versehene Haltevorrichtung bildet. Auf der Grundplatte 2, deren Oberfläche wellig ausgebildet ist, wie in den Bereichen zwischen den Messern 32 angedeutet, sind die Messer 32 mit ihren Kunststoffunterstützungen 50 erkennbar. Die zackige Form der Messer 32 und die dadurch gebildeten Nuten 48 ist deutlich. Zwischen und neben den Messern 32 ist die Grundplatte 2 durch Verdickungen 52 verstärkt.

Eine ähnliche Ansicht des Küchengerätes ist in Figur 5 dargestellt, jedoch ist hier der Schnitt durch den zentralen Bereich der Messer 32 geführt, so wie in Figur 1 durch V angedeutet. Man erkennt hierdurch, daß die Kunststoffunterstützungen 50 die Messer 32 durchsetzen, wodurch sie auf der Oberseite, wie in Figur 1 dargestellt, sichtbar sind. Bezüglich der übrigen Einzelheiten in dieser Figur 5 wird auf die vorangehende Beschreibung der Figur 4 verwiesen.

Figur 6 zeigt, wie bereits oben erwähnt, zwei Küchengeräte in der Ansicht aus Figur 2, die übereinandergestapelt sind. Auf diese Art können beliebig viele Küchengeräte gestapelt werden.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

### BEZUGSZEICHENLISTE

- 2: Grundplatte
- 4, 6: Anlaufflächen
- 8: Durchbrüche durch die Grundplatte 2
- 10: Messerreihen
- 32: Messer
- 34, 36, 38, 40: Seitenteile
- 42: Fingermulden
- 44: Führung
- 46: Wulst
- 48: Nut
- 50: Kunststoffunterstützung
- 52: Verdickungen
- 54: Wulst

## Patentansprüche

1. Küchengerät für das Schneiden oder Reiben von Gut, vorzugsweise Obst oder Gemüse, mit einer Grundplatte (2), auf deren Oberseite Anlaufflächen (4, 6) und zwischen diesen Anlaufflächen mindestens eine Messerreihe (10), die im wesentlichen quer zur Reib- oder Schneidrichtung (A) verlaufend angeordnet ist, vorgesehen sind, wobei an wenigstens zwei Rändern der Grundplatte (2) Seitenteile (34, 36, 38, 40) angeordnet sind, welche sich von den Rändern in die von den Anlaufflächen (4, 6) abgewandte Richtung erstrecken, wobei die Seitenteile (34, 36, 38, 40) mit der Unterseite der Grundplatte (2) einen Winkel von mehr als 90° bilden, so daß die Küchengeräte derart stapelbar sind, daß die Seitenteile (34, 36, 38, 40) eines ersten Küchengerätes die Seitenteile (34, 36, 38, 40) eines zweiten Küchengerätes zumindest teilweise umgreifen, wobei die Grundplatten (2) der Küchengeräte im wesentlichen parallel sind und mindestens ein Seitenteil (38, 40), welches im wesentlichen parallel zur Reib- oder Schneidrichtung (A) ist, an Außenseite und/oder Innenseite mit Ausformungen (46, 54) versehen ist, so daß beim Stapeln der Küchengeräte sich die Seitenteile (38, 40) zumindest bereichsweise kraftschlüssig umfassen.

2. Küchengerät nach Anspruch 1, dadurch gekennzeichnet, daß sich an allen Rändern der Grundplatte (2) Seitenteile (34, 36, 38, 40) befinden, wobei ein Seitenteil (34) an einem Rand, welcher im wesentlichen senkrecht zur Reib- oder Schneidrichtung (A) ist, als Haltevorrichtung ausgebildet ist.

3. Küchengerät nach einem der vorangehenden Ansprüche, dadurch gekennzeichnet, daß beide Seitenteile (38, 40), welche im wesentlichen parallel zur Reib- oder Schneidrichtung (A) sind, an Außenseite und Innenseite mit Ausformungen versehen sind, so daß beim Stapeln der Küchengeräte sich die Seitenteile kraftschlüssig umfassen.

4. Küchengerät nach einem der vorangehenden Ansprüche, dadurch gekennzeichnet, daß die Ausformung (46) an der Außenseite der Seitenteile (38, 40) eine sich im wesentlichen über die gesamte Länge der Seitenteile (38, 40) erstreckende Wulst ist und die Ausformung an der Innenseite der Seitenteile (38, 40) sich zumindest teilweise über die Länge der Seitenteile (38, 40) erstreckende, nicht durchgängige Wülste (54) sind.

5. Küchengerät nach einem der vorangehenden Ansprüche, dadurch gekennzeichnet, daß die Kraft für das kraftschlüssige Umfassen durch die Elastizität der Seitenteile (38, 40) aufgebracht wird.

6. Küchengerät nach einem der vorangehenden Ansprüche, dadurch gekennzeichnet, daß die Seitenteile (38, 40), welche sich an den Rändern befinden, die im wesentlichen parallel zur Reib- oder Schneidrichtung (A) verlaufen, über die Anlaufflächen (4, 6) der Grundplatte (2) hervorstehen, so daß sie eine Führung für die Reib- oder Schneidbewegung bilden.

7. Küchengerät nach einem der vorangehenden Ansprüche, dadurch gekennzeichnet, daß es eine Messeranordnung nach Patent Nr. 195 23 272 aufweist, wobei die mindestens eine Messerreihe (10) unter Bildung von oberen Querstegen ausgestaltet ist, wobei die die Messer bildenden oberen Querstege über die Anlaufflächen (4, 6) hinausragen und jeweils eine im wesentlichen zentral angeordnete Vertiefung in Richtung auf die Unterseite der Grundplatte (2) aufweisen, und an den Schneiden der oberen Querstege mindestens eine in Richtung der Grundplatte (2) weisende v-förmige Anlaufnut oder mindestens zwei, in Richtung von der Grundplatte (2) weg weisende, einen Zwischenraum zwischen ihnen definierende, v-förmige Anlaufnuten angeordnet sind, die sowohl in ihrer vertikalen als auch in ihrer quer zur Schneidrichtung (A) betrachteten horizontalen Ausdehnung der Größe der Vertiefung derart angepaßt sind, daß ihre Tiefe geringer ist als die Tiefe der Vertiefung und die Gesamtbreite der Anlaufnuten nicht breiter als die Breite der Vertiefung quer zur Schneidrichtung (A) ist, wobei mindestens eine Anlaufnut oder der Zwischenraum zwischen den mindestens zwei Anlaufnuten in Schneidrichtung (A) betrachtet im wesentlichen zentral vor der Vertiefung angeordnet ist.

8. Küchengerät nach einem der vorangehenden Ansprüche, dadurch gekennzeichnet, daß das Küchengerät, abgesehen von den Messern (32), aus Kunststoff besteht.

9. Küchengerät nach Anspruch 8, dadurch gekennzeichnet, daß die oberen Querstege der Messer (32) durch Kunststoffunterstützungen unterbaut sind.

10. Set aus Küchengeräten nach einem der vorangehenden Ansprüche.
